# EUROPEAN PATENT SPECIFICATION

(11) **EP 4 201 557 B1**
(45) Date of publication and mention of the grant of the patent: **07.10.2026**
(21) Application number: 22826638.3
(22) Date of filing: 21.10.2022
(51) Int. Cl.: B23B 5/32

(54) **ALL-ELECTRIC FIXED UNDERFLOOR WHEEL SETS LATHE**
VOLLELEKTRISCHE FIXIERTE UNTERFLUR-DREHMASCHINE FÜR RADSÄTZE
TOUR FIXE SOUS-SOL ENTIÈREMENT ÉLECTRIQUE POUR JEU DE ROUES

(30) Priority: 23.10.2021 CN 202111236770
(43) Date of publication of application: 28.06.2023
(73) Proprietor: Jinan Taichan Technology Co., Ltd., Jinan, Shandong 250000 (CN)
(72) Inventor: CAO, Cheng, Jinan, Shandong 250000 (CN); DENG, Shuibo, Jinan, Shandong 250000 (CN); SU, Benlong, Jinan, Shandong 250000 (CN); FAN, Qingpu, Jinan, Shandong 250000 (CN); SUN, Rui, Jinan, Shandong 250000 (CN); ZHANG, Jian, Jinan, Shandong 250000 (CN); LIU, Lianke, Jinan, Shandong 250000 (CN)
(74) Representative: Dr. Gassner & Partner mbB
(86) International application number: PCT/CN2022/126742
(87) International publication number: WO 2023/066379

(56) References cited:
- CN-A- 111 132 784
- CN-A- 113 319 692
- CN-A- 113 927 050
- CN-U- 204 470 624
- DE-A1- 3 931 747
- US-A- 4 347 769
- US-A1- 2019 210 175

## Description

### TECHNICAL FIELD

The present application relates to the technical field of wheel repair apparatus, more particularly to an all-electric fixed underfloor wheel sets lathe.

### BACKGROUND ART

An underfloor wheel sets lathe is an apparatus mainly used for repairing rims and treads of various rail vehicle wheels.

In the related art, for example, Chinese invention patent publication No. CN 107344244 A discloses a friction pulley floating drive device of a numerically controlled underfloor wheel sets lathe comprising a base, a drive mechanism and a hydraulic mechanism, wherein the drive mechanism is provided on the base, and the hydraulic mechanism is connected to the drive mechanism via a pipeline. The drive mechanism comprises a friction pulley box body, an electric motor, a coupling, an electric motor main shaft, friction driving pulleys, and a hydraulic oil cylinder, wherein the hydraulic oil cylinder and the friction pulley box body are both provided on the base, the hydraulic oil cylinder is connected to the friction pulley box body via a piston rod, the electric motor is provided on the friction pulley box body, the electric motor is connected to the electric motor main shaft via the coupling, the electric motor main shaft is provided in the friction pulley box body, and the friction driving pulleys are provided at the end of the electric motor main shaft.

When using the above-mentioned floating drive device for friction pulleys of a numerically controlled underfloor wheel sets lathe, the floating drive device for the friction pulley of the numerically controlled underfloor wheel sets lathe is mounted on a frame of the numerically controlled underfloor wheel sets lathe, wheels are placed on the frame and located directly above friction driving pulleys, a hydraulic oil cylinder is started, the hydraulic oil cylinder drives a friction pulley box body which then drives the friction driving pulleys to rotate, and the friction driving pulleys gradually abut against the bottom of the wheels and lifts the wheel, so that the wheels are separated from a rail. The motor is started to drive the friction driving pulleys to rotate, and the friction driving pulleys drive the wheels to rotate.

In the prior art, there are known some devices as described in their respective documents. The patent application US4347769A discloses an underfloor wheel set lathe for the profiling of wheel sets of trackbound vehicles of the type in which the wheels are at least in part supposed by rolls carried by a roll carrier, at least one of the rolls being driven. Movement of the roll carrier is resisted by a horizontally acting brake mechanism which permits vertical lifting movements of the carrier. The force with which horizontal movement is resisted may, by suitable hydraulic means, be controlled as a function of the cutting force or driving force imparted to the wheels, the lifting force exerted against the wheels, or otherwise coordinated with the force applied in the course of profiling.

With regard to the above-mentioned related art, the inventor believes that after the friction driving pulleys lift the wheel, a central axis of the friction driving pulleys are provided at an angle to a central axis of the wheel, and then the contact area between the friction driving pulleys and the wheels is reduced, so that the wear of the friction driving pulleys on the wheels are greater, and there is a defect that the friction driving pulleys become a burden for the repair of the wheel.

### SUMMARY

In order to alleviate the problem of the burden of repairing the wheels caused by the friction driving pulleys, the present application provides an all-electric fixed underfloor wheel sets lathe. The above-mentioned obj ectives are solved with the features of independent claim 1. Further embodiments are defined in the dependent claims.

The present invention provides an all-electric fixed underfloor wheel sets lathe using the following technical solution: an all-electric fixed underfloor wheel sets lathe comprising a frame, two rails provided on the frame, two lathe tools provided on the frame and two wheel driving devices provided on the frame, wherein each wheel driving device comprises a leveling bracket, drive assemblies provided on the leveling bracket, a lifting assembly provided on the leveling bracket and a leveling assembly provided on the leveling bracket, the lifting assembly and the leveling assembly are fixedly connected to the frame, the drive assemblies are configured for driving wheels to rotate and the lifting assembly is configured for lifting the leveling bracket.

The lifting assembly comprises a lifting frame and a drive structure for driving the lifting frame, the drive structure is fixedly connected to the frame, and the lifting frame is hinged to the leveling bracket.

The drive structure comprises a fixed housing, a drive rod having one end slidably connected in a fixed housing, a first ball screw rotatable in the fixed housing and a servo motor fixedly connected to the fixed housing, wherein the servo motor is in transmission connection with a screw of the first ball screw, a nut of the first ball screw is fixedly connected to the drive rod, the drive rod is fixedly connected to the lifting frame, and the fixed housing is fixedly connected to the frame.

The all-electric fixed underfloor wheel sets lathe further comprises a pressure sensor by which the drive rod is fixedly connected to the lifting frame.

By using the above-mentioned technical solution, when repairing a wheel, the wheel is driven onto a rail, and then a lifting assembly is operated to lift a leveling bracket which drives the drive assembly to move; the drive assembly moves in a direction close to the wheel; the drive assembly gradually abuts the bottom of the wheel and lifts the wheel, and then the wheel is gradually separated from the rail; after the wheel is separated from the rail, the leveling assembly is operated to drive the leveling bracket which is gradually in a horizontal state, then the drive structure is operated to enable the drive structure to drive the wheel to rotate, then the lathe tool is operated to repair the wheel.

A rotation axis of the drive assembly and a rotation axis of the wheel are in a parallel state by adjusting the leveling bracket to a horizontal state, thereby reducing the occurrence of an included angle between the rotation axis of the drive assembly and the rotation axis of the wheel that will affect the contact area between the drive assembly and the wheel, reducing the occurrence of wear on the wheel by the drive assembly, and further reducing the occurrence of a burden on the wheel repair by the drive assembly; at the same time, the leveling assembly can be configured for adjusting the height of the outer side of the leveling bracket, i.e., adjusting the height of one end of the leveling bracket away from the wheel, so that the height of the outer side of the leveling bracket of the two sets of wheel driving devices respectively located at two sides of the rail is consistent, reducing the occurrence of the symmetry decrease of the wheel treads at the two sides after repair, thereby improving the accuracy of wheel tread repair.

When the wheels are lifted and separated from the rail, the drive structure is operated to lift the lifting frame, the lifting frame drives the leveling bracket to move the drive assembly, and the drive assembly drives the wheels to rise, and then the wheels are separated from the rail, i.e., to lift the wheel.

When driving the lifting frame, a servo motor is started, the servo motor drives the screw of the first ball screw to rotate, a nut of the first ball screw rotates relative to the screw and moves along the length direction of the screw, the nut drives the drive rod to move, the drive rod slides relative to the fixed housing, and the drive rod drives the lifting frame while moving, i.e., the lifting frame is driven.

When the drive rod drives the lifting frame, the lifting frame drives the leveling bracket to move the drive assembly, and the drive assembly gradually abuts against the bottom of the wheel, so that the pressure received by the pressure sensor gradually increases, and when the pressure received by the pressure sensor does not change any more, the driving of the lifting frame is discontinued, thereby achieving the effect of facilitating the staff to control the lifting height of the lifting frame.

The leveling assembly may comprise a leveling housing, a leveling rod having one end slidably connected in the leveling housing, a second ball screw rotatably connected in the leveling housing and a hand-held rod fixedly connected to the second ball screw, wherein a nut of the second ball screw is fixedly connected to the leveling rod which is hinged to the leveling bracket, and the leveling housing is fixedly connected to the frame.

By using the above-mentioned technical solution, after the wheels are lifted by adjusting the lifting assembly, a hand-held rod is rotated to rotate the screw rod of the second ball screw; the nut of the second ball screw rotates relative to the screw rod, the nut moves along a length direction of the screw rod and drives the leveling rod to move; the leveling rod and the leveling bracket rotate relative to each other, and then the leveling bracket is gradually in a horizontal state, thereby ensuring the contact area between the drive assembly and the wheels as far as possible, reducing the wear on the wheels by the drive assembly, and further reducing the burden on the wheel repair caused by the drive assembly.

The apparatus may further comprise a wheel axial limiting device provided in two which respectively abut against the inner sides of two wheels, and the wheel axial limiting devices are both configured for limiting the wheels in an axial direction of the wheels.

By using the above-mentioned technical solution, when the drive assembly drives the wheels, the wheel axial limiting devices limit the axial movement of the wheels, thereby reducing the occurrence of the wheels moving along their own axial direction during the rotation process, on the one hand, increasing the stability of the wheels when the all-electric fixed underfloor wheel sets lathe repairs the wheels, and on the other hand, improving the efficiency of the all-electric fixed underfloor wheel sets lathe in repairing the wheels.

Each wheel axial limiting device may comprise a device body, a limiting rod having one end slidably connected in the device body, a limiting pulley rotatably connected to the limiting rod, and a pushing assembly for pushing the limiting rod to slide, wherein the limiting pulley is provided with limiting grooves abutting against the rims of the wheels, and the device body is fixedly connected to the frame.

By using the above-mentioned technical solution, after the wheels are separated from the rail, the pushing assembly is operated to push the limiting rod which drives the limiting pulley to move, and then the limiting pulley moves towards the direction close to the wheel, so that the limiting groove on the limiting pulley abuts against the rim of the wheel, and when the wheels rotate, the limiting pulley and the wheel rotate relative to each other, thereby achieving the effect of axially limiting the wheel.

The pushing assembly may comprise a third ball screw and a first drive motor, wherein the first drive motor is in transmission connection with a screw of the third ball screw, a nut of the third ball screw is fixedly connected to the limiting rod, and the first drive motor is fixedly connected to the device body.

By using the above-mentioned technical solution, when the limiting rod is driven, the first drive motor is started to drive the first drive motor drives the screw of the third ball screw to rotate, the nut of the first ball screw and the screw rotate relative to each other, the nut moves along the length direction of the screw, and the nut drives the limiting rod to move, i.e., the limiting rod is driven.

An outer sleeve of the limiting rod may be provided with a guide sleeve having one end slidably connected to the device body, and the guide sleeve moves with the movement of the limiting rod.

By using the above-mentioned technical solution, when the limiting rod moves, the limiting rod drives the guide sleeve to move, and the guide sleeve slides relative to the device body; and by providing the guide sleeve on the outside of the limiting rod, the maximum lateral pressure that the limiting rod can bear can be increased, and the occurrence of bending deformation of the limiting rod can be reduced, thereby increasing the stability of the limiting pulley.

The device body may be provided with a limiting block for limiting the movement of the guide sleeve, a rotation seat is hinged on the limiting rod, the limiting pulley is rotatably connected to the rotation seat having one end near the limiting pulley hinged to the guide sleeve.

By using the above-mentioned technical solution, when the limiting rod moves, the guide sleeve moves with the movement of the limiting rod; when the guide sleeve moves to the limit position, the limiting block limits the movement of the guide sleeve; the guide sleeve cannot continue to move; the limiting rod continues to move; the limiting rod drives the rotation seat, and the rotation seat and the guide sleeve rotate relative to each other, so that the central axis of the limiting pulley gradually forms an included angle with the central axis of the wheel, thereby increasing the axial pressure exerted by the limiting pulley on the wheel, thereby increasing the axial limiting effect of the limiting pulley on the wheel.

In summary, the present invention comprises at least one of the following beneficial technical effects: by providing a leveling bracket, a drive assembly, a lifting assembly and a leveling assembly, after placing wheels on a rail, the lifting assembly lifts the leveling bracket, the leveling bracket drives the drive assembly to move, the drive assembly gradually abuts against the bottom of the wheels and lifts the wheels, and after the wheels are separated from the rail, the leveling assembly is operated to adjust the leveling bracket, so that the leveling bracket is in a horizontal state, thereby reducing the formation of an included angle between the central axis of the drive assembly and the central axis of the wheel, resulting in serious wear on the wheel, and further reducing the burden caused by wheel repair; the leveling assembly can be configured for adjusting the height of the outer side of the leveling bracket, i.e., adjusting the height of one end of the leveling bracket away from the wheel, so that the heights of the outer sides of the leveling brackets of the two sets of wheel driving devices respectively located at two sides of the rail are consistent, reducing the occurrence of the symmetry decrease of the wheel treads at the two sides after repair, and further improving the accuracy of wheel tread repair; by providing a lifting frame and a drive structure, the drive structure is configured for driving the lifting frame, and when the leveling bracket is lifted, the drive structure is started, the drive structure drives the lifting frame, and the lifting frame drives the leveling bracket, i.e., the leveling bracket is lifted; by providing a fixed housing, a drive rod, a first ball screw and a servo motor, when driving the lifting frame, the servo motor is started to drive the first ball screw which drives the drive rod, and the drive rod drives the lifting frame, then enabling the lifting frame to lift the leveling bracket to lift the leveling bracket.

### BRIEF DESCRIPTION OF THE DRAWINGS

FIG. 1 is a schematic view showing an overall structure of an all-electric fixed underfloor wheel sets lathe according to an embodiment of the present invention;
FIG. 2 is another perspective view of the all-electric fixed underfloor wheel sets lathe according to an embodiment of the present invention;
FIG. 3 is a schematic view showing a configuration of a wheel driving device in the all-electric fixed underfloor wheel sets lathe according to an embodiment of the present invention;
FIG. 4 is another perspective structural view of the wheel driving device in the all-electric fixed underfloor wheel sets lathe according to an embodiment of the present invention, mainly showing a hemispherical groove;
FIG. 5 is another perspective structural view of the wheel driving device in the all-electric fixed underfloor wheel sets lathe according to an embodiment of the present invention, mainly showing a leveling assembly; and
FIG. 6 is a schematic view showing the structure of the wheel axial direction limiting device in the all-electric fixed underfloor wheel sets lathe according to an embodiment of the present invention.

Description of reference numerals: 100, frame; 200, rail; 300, lathe tool; 400, wheel driving device; 410, leveling bracket; 411, hemispherical groove; 420, drive assembly; 421, friction driving pulley; 422, second drive motor; 430, lifting assembly; 431, lifting frame; 432, drive structure; 433, fixed housing; 434, drive rod; 435, first ball screw; 436, servo motor; 437, pressure sensor; 440, leveling assembly; 441, leveling housing; 442, leveling rod; 443, second ball screw; 444, hand-held rod; 445, receiving cavity; 500, wheel axial direction limiting device; 510, device body; 511, limiting block; 520, limiting rod; 521, placing cavity; 522, spring; 523, waist-shaped limiting groove; 530, limiting pulley; 531, limiting groove; 540, push assembly; 541, third ball screw; 542, first drive motor; 600, guide sleeve; 700, rotation seat; and 800, wheel.

### DETAILED DESCRIPTION

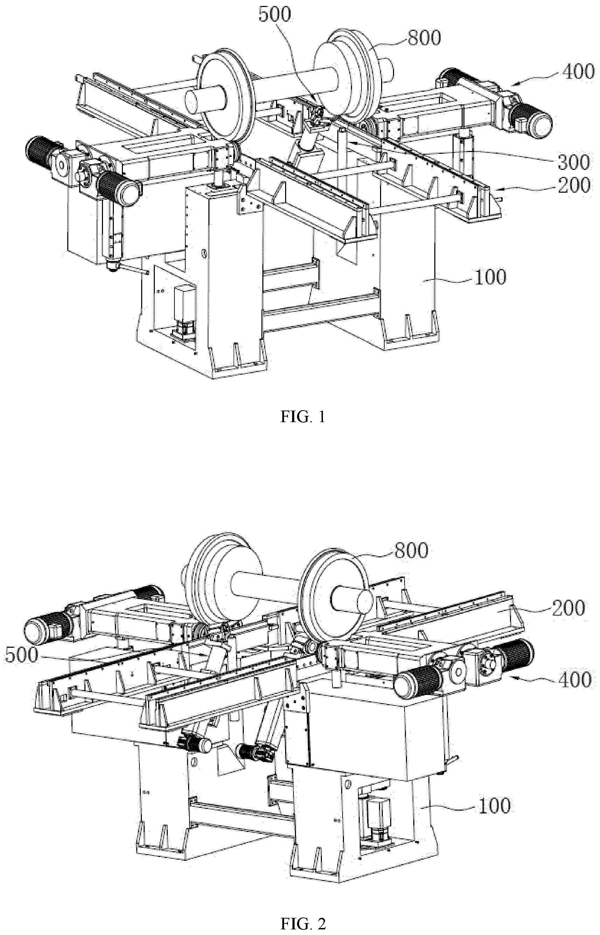

This application is described in further detail below with reference to FIGS. 1-6.

The embodiments of the present invention disclose an all-electric fixed underfloor wheel sets lathe.

Referring to FIGS. 1 and 2, an all-electric fixed underfloor wheel sets lathe comprises a frame 100, two rails 200, two lathe tools 300, two sets of wheel driving devices 400, wherein the two rails 200 are provided in parallel and spaced apart. A rail 200, a lathe tool 300 and a set of wheel driving devices 400 are provided on one side of the frame 100, and another rail 200, another lathe tool 300 and another set of wheel driving devices 400 are provided on the other side of the frame 100. When repairing a wheel 800, it is driven onto the rail 200 and moved to the top of the wheel driving device 400 which lifts the wheel 800 and then separates the wheel 800 from the rail 200, and then the wheel driving device 400 drives the wheel 800 to rotate, and the lathe tool 300 repairs the wheel 800, i.e. the effect of repairing the wheel 800 is achieved.

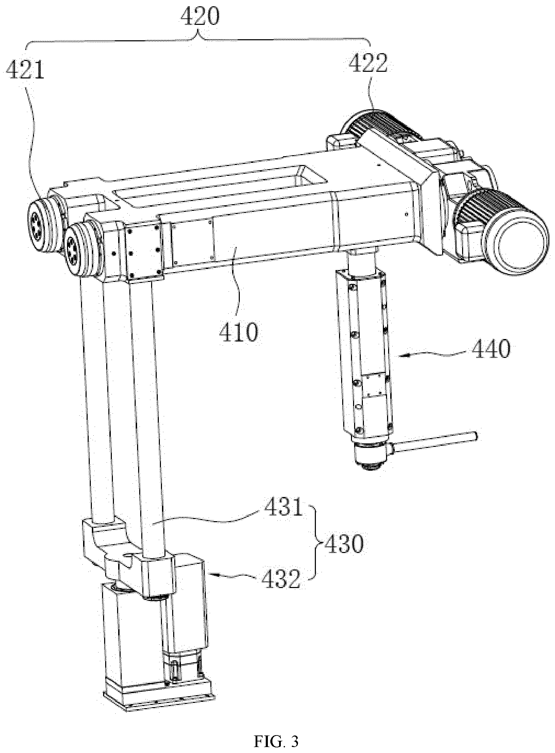

Referring to FIGS. 1 and 3, in order to lift the wheels 800 and drive the wheels 800 to rotate, the wheel driving device 400 includes a leveling bracket 410, a drive assembly 420 provided on the leveling bracket 410, and a lifting assembly 430 provided at one end of the bottom of the leveling bracket 410. The lifting assembly 430 is an all-electric cushioning type assembly. The lifting assembly 430 is used to lift one end of the leveling bracket 410, and the drive assembly 420 is configured for driving the wheel 800 lifted to rotate, i.e., the wheel 800 is lifted and rotated.

After lifting the leveling bracket 410 by the lifting assembly 430, an included angle is formed between the leveling bracket 410 and the central axis of the wheel 800, so that the contact surface between the drive assembly 420 and the wheel 800 is smaller, so that the pressure at the contact position between the drive assembly 420 and the wheel 800 is greater, thereby resulting in more wear of the wheel 800 by the drive assembly 420, and finally causing a burden on the repair of the wheel 800.

Referring to FIGS. 1 and 3, in order to reduce the occurrence of severe wear of the drive assembly 420 on the wheel 800, resulting in a burden on the repair of the wheel 800, the wheel driving device 400 further comprises a leveling assembly 440 provided at the bottom of the leveling bracket 410 and located at an end of the leveling bracket 410 away from the lifting assembly 430. After lifting the wheel 800, the leveling assembly 440 is operated to drive the leveling bracket 410 which is gradually in a horizontal state, and then the central axis of the drive assembly 420 is set to be collinear with the central axis of the wheel 800 as far as possible to reduce the occurrence of forming an included angle between the central axis of the drive assembly 420 and the central axis of the wheel 800, thereby reducing the occurrence of heavy wear of the wheel 800 by the drive assembly 420 and causing a burden on the repair of the wheel 800.

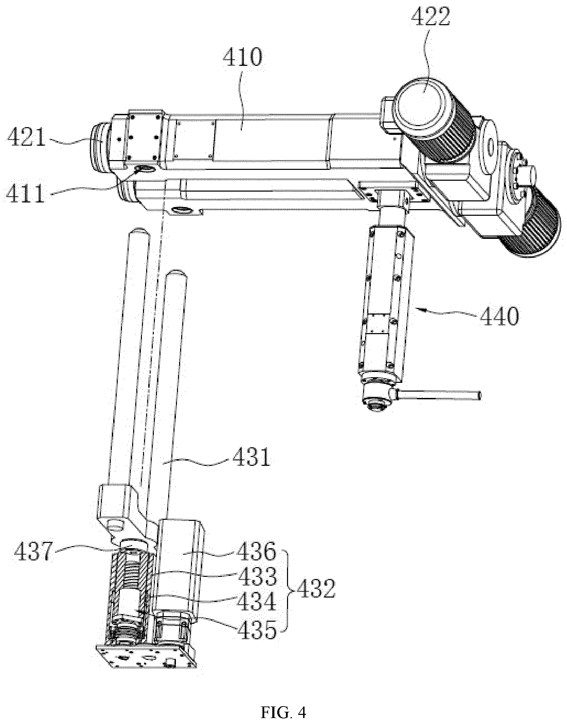

Referring to FIGS. 1 and 4, in order to lift the leveling bracket 410, the lifting assembly 430 comprises a lifting frame 431 and a drive structure 432, wherein the lifting frame 431 is U-shaped, an opening of the lifting frame 431 faces a leveling bracket 410, and the lifting frame 431 is hinged to the bottom of the leveling bracket 410, and the drive structure 432 is fixedly connected to the frame 100. When the leveling bracket 410 is lifted, the drive structure 432 is operated to drive the lifting frame 431 to lift the leveling bracket 410, and the lifting frame 431 and the leveling bracket 410 rotate relative to each other, i.e., the leveling bracket 410 is lifted.

Referring to FIGS. 1 and 4, in order to drive the lifting frame 431, the drive structure 432 includes a fixed housing 433, a drive rod 434 provided for a pipe body and having one end slidably coupled in the fixed housing 433, a first ball screw 435, and a servo motor 436. The first ball screw 435 is rotatably connected in the fixed housing 433, the first ball screw 435 is provided parallel to the drive rod 434, the nut of the first ball screw 435 is fixedly connected to the drive rod 434, and the screw of the first ball screw 435 is in a drive connection to the output shaft of the servo motor 436. The servo motor 436 is fixedly connected to a fixed housing 433 which is fixedly connected to a frame 100. The drive rod 434 is located at the bottom of the lifting frame 431 and is fixedly connected to the bottom of the lifting frame 431. When the lifting frame 431 is driven, the servo motor 436 is started to drive the screw of the first ball screw 435 to rotate; the screw of the first ball screw 435 and the nut rotate relative to each other; the nut moves along the length direction of the screw; and at the same time, the nut drives the drive rod 434 to move, i.e., the lifting frame 431 is driven.

Referring to FIGS. 1 and 4, in order to facilitate a worker in determining the height at which a wheel 800 is lifted, the drive rod 434 is fixedly connected to the lifting frame 431 through a pressure sensor 437 which is fixedly connected to the bottom of the lifting frame 431 and fixedly connected to the top of the drive rod 434. When a wheel 800 is lifted, the drive assembly 420 gradually abuts against the wheel 800, and as the height of the wheel 800 being lifted increases, the pressure experienced by the pressure sensor 437 increases. When the pressure experienced by the pressure sensor 437 no longer changes, the lifting of the wheel 800 is discontinued, indicating that the wheel 800 has disengaged from the rail 200, thereby facilitating a worker to determine a height at which the wheel 800 has been lifted.

With reference to FIGS. 1 and 4, in order to increase the stability when the lifting frame 431 and the leveling bracket 410 rotate relative to each other, one end of the lifting frame 431 away from the drive rod 434 is provided in a hemispherical shape, the bottom of the leveling bracket 410 is provided with a hemispherical groove 411 corresponding to the lifting frame 431, and one end of the lifting frame 431 in a hemispherical shape is inserted into the hemispherical groove 411. When the lifting frame 431 drives the leveling bracket 410, one end of the lifting frame 431 in a hemispherical shape rotates in the hemispherical groove 411, thereby reducing the occurrence of separation between the lifting frame 431 and the leveling bracket 410, and further increasing the stability when the lifting frame 431 and the leveling bracket 410 rotate relative to each other.

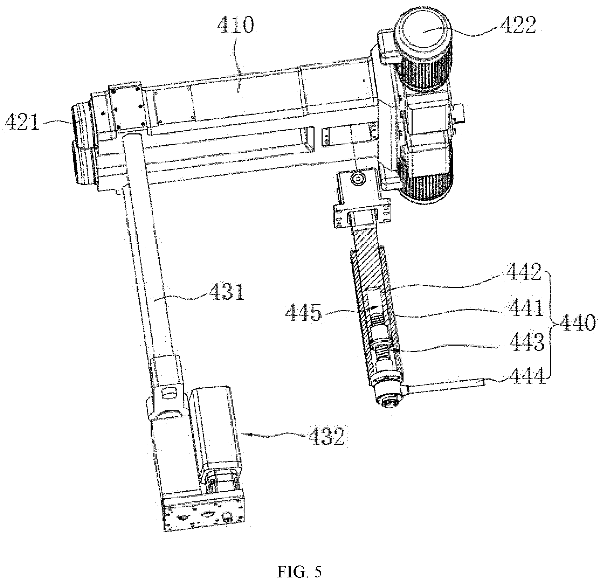

Referring to FIGS. 1 and 5, in order to level the leveling bracket 410, the leveling assembly 440 comprises a leveling housing 441, a leveling rod 442, a second ball screw 443 and a hand-held rod 444, wherein one end of the leveling rod 442 is provided with a receiving cavity 445, and one end of the leveling rod 442 provided with the receiving cavity 445 is slidably connected in the leveling housing 441. One end of the second ball screw 443 is rotatably connected in the leveling housing 441, one end of the screw of the second ball screw 443 is inserted into the receiving cavity 445, and the nut of the second ball screw 443 is fixedly connected to the cavity port in the receiving cavity 445. The hand-held rod 444 is vertically fixedly connected to an end of the screw of the second ball screw 443 outside the leveling housing 441. The leveling housing 441 is fixedly connected to the frame 100, and the leveling rod 442 is hinged to an end of the leveling bracket 410 away from the lifting frame 431.

When the leveling bracket 410 is leveled, the hand-held rod 444 is rotated; the hand-held rod 444 drives the screw of the second ball screw 443 to rotate; the screw of the second ball screw 443 and the nut rotate relatively; the nut moves along the length direction of the screw; at the same time, the nut drives the leveling rod 442; the leveling rod 442 drives the leveling bracket 410; and the leveling bracket 410 and the leveling rod 442 rotate relatively, so that the leveling bracket 410 is gradually in a horizontal state, thereby achieving the effect of leveling the leveling bracket 410.

During rotation of a wheel 800 by the drive assembly 420, the wheel 800 may move in its own axial direction, which in turn makes repair of the wheel 800 by the lathe tool 300 less efficient.

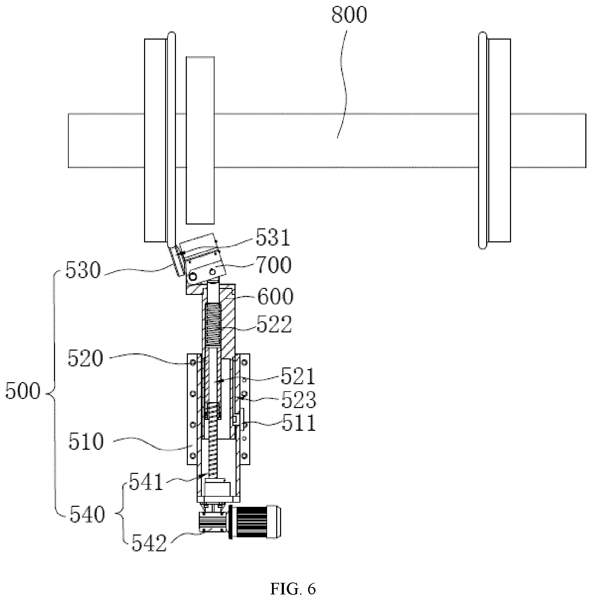

Referring to FIGS. 1 and 6, in order to reduce the movement of a wheel 800 in its own axial direction and improve the repair efficiency of the lathe tool 300 to the wheel 800, the all-electric fixed underfloor wheel sets lathe further comprises a wheel axial limiting device 500 provided in two sets, including one set of the wheel axial limiting devices 500 provided on one side of the frame 100, and the other set of the wheel axial limiting devices 500 provided on the other side of the frame 100. When the wheel 800 is axially limited, the two sets of wheel axial limiting devices 500 respectively interfere with the inner sides of the two wheels 800, and the two sets of wheel axial limiting devices 500 are both configured for axially limiting the wheel 800 to reduce the movement of the wheel 800 in the axial direction thereof when the wheel 800 rotates, thereby increasing the stability of the wheel 800 when it rotates, thereby improving the repair efficiency of the lathe tool 300 for the wheel 800.

Referring to FIGS. 1 and 6, in order to achieve axial limiting of a wheel 800, each set of wheel axial limiting devices 500 comprises a device body 510, a limiting rod 520, a limiting pulley 530 and a pushing assembly 540, wherein the limiting pulley 530 is provided with a limiting groove 531 provided along the circumferential direction of the limiting pulley 530. A limiting pulley 530 is provided at one end of the limiting rod 520, and the limiting pulley 530 is rotatably connected to the limiting rod 520. An end of the spacing rod 520 away from the limiting pulley 530 is slidably connected in the device body 510, and the pushing assembly 540 is provided on the device body 510, and the device body 510 is fixedly connected to the frame 100. After a wheel 800 is separated from the rail 200, the pushing assembly 540 is operated to drive the limiting rod 520 which drives the limiting pulley 530 to move, the limiting pulley 530 moves in a direction close to the wheel 800, and then the limiting pulley 530 gradually abuts against the wheel 800, and the limiting groove 531 abuts against the rim of the wheel 800. When the drive assembly 420 drives the wheel 800 to rotate, the limiting pulley 530 rotates with the rotation of the wheel 800, and the two limiting pulleys 530 respectively apply forces in opposite directions to the two wheels 800, i.e. the two wheels 800 are axially limited.

Referring to FIGS. 1 and 6, in order to push the limiting rod 520, the pushing assembly 540 includes a third ball screw 541 and a first drive motor 542, and an output shaft of the first drive motor 542 is fixedly connected coaxially with a screw of the third ball screw 541. The third ball screw 541 is located in the device body 510, the screw of the third ball screw 541 is provided coaxially with the limiting rod 520, one end of the limiting rod 520 located in the device body 510 is provided with a placing cavity 521 accommodating the third ball screw 541, one end of the screw of the third ball screw 541 penetrates into the placing cavity 521, and a nut of the third ball screw 541 is fixedly connected to a cavity port of the placing cavity 521. The first drive motor 542 is fixedly connected to the device body 510 which is fixedly connected to the frame 100. When the limiting rod 520 is pushed, the first drive motor 542 is started to drive the screw rod of the third ball screw 541 to rotate; the screw rod of the third ball screw 541 and the nut rotate relative to each other; the nut moves along the length direction of the screw rod; and the nut drives the limiting rod 520 to move, i.e., the limiting rod 520 is pushed.

When the limiting pulley 530 limits a wheel 800, the wheel 800 applies a force perpendicular to the length direction of the limiting rod 520 to the limiting pulley530, which causes the limiting rod 520 to bend. In order to reduce the occurrence of easy bending of the limiting rod 520, an outer sleeve of the limiting rod 520 is provided with a guide sleeve 600 having one end inserted into the device body 510 and slidably coupled with the device body 510. When the pushing assembly 540 drives the limiting rod 520, the limiting rod 520 slides relative to the device body 510, and the guide sleeve 600 moves with the movement of the limiting rod 520, so that the guide sleeve 600 enhances the strength of the limiting rod 520, thereby increasing the maximum lateral pressure that the limiting rod 520 can bear, thereby reducing the occurrence of bending the limiting rod 520.

Referring to FIGS. 1 and 6, in order to achieve that the guide sleeve 600 moves with the movement of the limiting rod 520, the diameter of the limiting rod 520 near the end of the limiting pulley 530 is smaller than that of the limiting rod 520 away from the end of the limiting pulley 530. An aperture of a central hole of the guide sleeve 600 near the end of the limiting pulley 530 is smaller than that of the central hole of the guide sleeve 600 away from the end of the limiting pulley 530. A spring 522 is sleeved on the limiting rod 520, one end of the spring 522 abuts against an end of a thicker end of the limiting rod 520, and the other end of the spring 522 abuts against an end wall of the thicker end of the central hole of the guide sleeve 600. When the limiting rod 520 moves, the limiting rod 520 drives the spring 522 to move, so that the guide sleeve 600 moves with the movement of the limiting rod 520 under the action of the spring 522, i.e., the guide sleeve 600 moves with the movement of the limiting rod 520.

Referring to FIGS. 1 and 6, in order to increase the effect of axially limiting a wheel 800 by a wheel axial direction limiting device 500, a circumferential side surface of the guide sleeve 600 is provided with a waist-shaped limiting groove 523, the length direction of which is parallel to the axial direction of the guide sleeve 600. A limiting block 511 is fixedly connected to the device body 510, one end of the limiting block 511 is inserted into the device body 510, and the other end of the limiting block 511 is located in the waist-shaped limiting groove 523. The limiting pulley 530 is rotatably connected to the limiting rod 520 via a rotation seat 700; the limiting pulley 530 is rotatably connected to the rotation seat 700 which is hinged to the limiting rod 520; and one end of the rotation seat 700 near the limiting pulley 530 is hinged to the guide sleeve 600.

When the limiting rod 520 moves, the guide sleeve 600 moves with the movement of the limiting rod 520, and the limiting block 511 slides relative to the waist-shaped limiting groove 523. When the limiting block 511 abuts against an end wall of the waist-shaped limiting groove 523, the guide sleeve 600 stops moving, the limiting rod 520 continues moving, the limiting rod 520 compresses the spring 522, the limiting rod 520 drives the rotation seat 700, the rotation seat 700 and the guide sleeve 600 rotate relative to each other, and the rotation seat 700 drives the limiting pulley 530 to rotate until the limiting groove 531 abuts against the rims of the wheels 800. At this moment, an included angle is formed between the rotation axis of the limiting pulley 530 and the rotation axis of the wheel 800, and this state can increase the limiting effect of the limiting pulley 530 on the axial direction of the wheel 800.

Referring to FIGS. 1 and 3, finally, in order to drive the wheels 800, the drive assembly 420 includes two friction driving pulleys 421 and two second drive motors 422, and one second drive motor 422 is provided corresponding to one friction driving pulley 421. Each second drive motor 422 is in a drive connection to a corresponding friction driving pulley 421. The friction driving pulleys 421 on the two sets of drive assemblies 420 are oppositely provided. The friction driving pulleys 421 are rotatably connected to the leveling bracket 410, and the second drive motor 422 is fixedly connected to the leveling bracket 410. After the wheels 800 move onto the rail 200, they are positioned on top between two friction driving pulleys 421 on the same set of drive assemblies 420. When driving the wheels 800, the friction driving pulleys 421 abut against the wheels 800, the second drive motor 422 drives the friction driving pulleys 421 which drive the wheels 800, i.e., the wheels 800 are driven.

The implementation principle of an all-electric fixed underfloor wheel sets lathe of the embodiments of the present application is as follows: when repairing the wheels 800 using the all-electric fixed underfloor wheel sets lathe, the wheels 800 are first moved onto the rail 200 of the all-electric fixed underfloor wheel sets lathe. A servo motor 436 is then started, which in turn causes the drive rod 434 to drive the lifting frame 431 which rotates relative to the leveling bracket 410 and leveling bracket 410 is lifted, the friction driving pulleys 421 abut against the wheels 800 and lift the lifting wheels 800 off from the rail 200.

The hand-held rod 444 is rotated, so that the leveling rod 442 drives the leveling bracket 410, and the leveling bracket 410 is gradually in a horizontal state to ensure the contact area between the friction driving pulleys 421 and the wheels 800 as far as possible, and reducing the occurrence of additional wear on the wheels 800 due to the smaller contact area between the friction driving pulleys 421 and the wheels 800.

Then, the first drive motor 542 is started again, so that the limiting rods 520 drive the limiting pulleys 530 toward the wheels 800, and finally the limiting groove 531 abuts against rims of the wheels 800. Finally, the second drive motor 422 is started to drive the friction driving pulleys 421 to drive the wheels 800 to rotate, and the lathe tool 300 repairs the wheels 800.

The above-mentioned preferred embodiments of the present invention do not limit the scope of protection of the present invention and changes are possible within the scope of the appended claims.

## Claims

1. An all-electric fixed underfloor wheel sets lathe, comprising: a frame (100), two rails (200) provided on the frame (100), two lathe tools (300) provided on the frame (100) and two wheel driving devices (400) provided on the frame (100), wherein each wheel driving device (400) comprises a leveling bracket (410), drive assemblies (420) provided on the leveling bracket (410), a lifting assembly (430) provided on the leveling bracket (410) and a leveling assembly (440) provided on the leveling bracket (410), the lifting assembly (430) and the leveling assembly (440) are both fixedly connected to the frame (100), the drive assemblies (420) are configured for driving wheels (800) to rotate, and the lifting assembly (430) is configured for lifting the leveling bracket (410);
wherein, the lifting assembly (430) comprises a lifting frame (431) and a drive structure (432) for driving the lifting frame (431), wherein the drive structure (432) is fixedly connected to the frame (100), and the lifting frame (431) is hinged to the leveling bracket (410),
wherein, the drive structure (432) comprises a fixed housing (433), a drive rod (434) having one end slidably connected in the fixed housing (433), a first ball screw (435) rotatable in the fixed housing (433) and a servo motor (436) fixedly connected to the fixed housing (433), wherein the servo motor (436) is in transmission connection with a screw of the first ball screw (435), a nut of the first ball screw (435) is fixedly connected to the drive rod (434) which is fixedly connected to the lifting frame (431), and the fixed housing (433) is fixedly connected to the frame (100),
wherein, the all-electric fixed underfloor wheel sets lathe further comprises a pressure sensor (437) by which the drive rod (434) is fixedly connected to the lifting frame (431),

2. The all-electric fixed underfloor wheel sets lathe according to claim 1, **characterized in that** the leveling assembly (440) comprises a leveling housing (441), a leveling rod (442) having one end slidably connected in the leveling housing (441), a second ball screw (443) rotatably connected in the leveling housing (441) and a hand-held rod (444) fixedly connected to the second ball screw (443), a nut of the second ball screw (443) is fixedly connected to the leveling rod (442), the leveling rod (442) is hinged to the leveling bracket (410), and the leveling housing (441) is fixedly connected to the frame (100).

3. The all-electric fixed underfloor wheel sets lathe according to claim 1, **characterized by** further comprising wheel axial limiting devices (500), wherein the two wheel axial limiting devices (500) respectively abut against the inner sides of two wheels (800), and the wheel axial limiting devices (500) are configured for limiting the wheels (800) in an axial direction of the wheels (800).

4. The all-electric fixed underfloor wheel sets lathe according to claim 3, **characterized in that** each wheel axial limiting device (500) comprises a device body (510), a limiting rod (520) having one end slidably connected in the device body (510), a limiting pulley (530) rotatably connected to the limiting rod (520), and a pushing assembly (540) configured for pushing the limiting rod (520) to slide; the limiting pulley (530) is provided with limiting grooves (531) abutting against rims of the wheels (800); and the device body (510) is fixedly connected to the frame (100).

5. The all-electric fixed underfloor wheel sets lathe according to claim 4, **characterized in that** the pushing assembly (540) comprises a third ball screw (541) and a first drive motor (542), wherein the first drive motor (542) is in transmission connection with a screw of the third ball screw (541), a nut of the third ball screw (541) is fixedly connected to the limiting rod (520), and the first drive motor (542) is fixedly connected to the device body (510).

6. The all-electric fixed underfloor wheel sets lathe according to claim 4, **characterized in that** an outer sleeve of the limiting rod (520) is provided with a guide sleeve (600) having one end slidably connected to the device body (510), and the guide sleeve (600) moves with movement of the limiting rod (520).

7. The all-electric fixed underfloor wheel sets lathe according to claim 6, **characterized in that** a limiting block (511) for limiting movement of the guide sleeve (600) is provided on the device body (510), a rotation seat (700) is hinged on the limiting rod (520), the limiting pulley (530) is rotatably connected to the rotation seat (700) having one end near the limiting pulley (530) hinged with the guide sleeve (600).

## Patentansprüche

1. Vollelektrische fixierte Unterflur-Drehmaschine für Radsätze, aufweisend: einen Rahmen (100), zwei am Rahmen (100) angeordnete Schienen (200), zwei am Rahmen (100) angeordnete Drehwerkzeuge (300) und zwei am Rahmen (100) angeordnete Radantriebsvorrichtungen (400), wobei jede Radantriebsvorrichtung (400) eine Nivellierhalterung (410), an der Nivellierhalterung (410) angeordnete Antriebsbaugruppen (420), eine an der Nivellierhalterung (410) angeordnete Hebevorrichtung (430) und eine an der Nivellierhalterung (410) angeordnete Nivelliervorrichtung (440) aufweist, wobei die Hebevorrichtung (430) und die Nivelliervorrichtung (440) beide fest mit dem Rahmen (100) verbunden sind, die Antriebsbaugruppen (420) sind dazu ausgelegt, Räder (800) in Drehung zu versetzen, und die Hebevorrichtung (430) ist dazu ausgelegt, die Nivellierhalterung (410) anzuheben;
wobei die Hebevorrichtung (430) einen Heberahmen (431) und eine Antriebsvorrichtung (432) zum Antreiben des Heberahmens (431) umfasst, wobei die Antriebsvorrichtung (432) fest mit dem Rahmen (100) verbunden ist und der Heberahmen (431) gelenkig an der Nivellierhalterung (410) angebracht ist,
wobei die Antriebsvorrichtung (432) ein feststehendes Gehäuse (433), eine Antriebsstange (434), deren eines Ende verschiebbar im feststehenden Gehäuse (433) gelagert ist, eine erste Kugelumlaufspindel (435), die in dem feststehenden Gehäuse (433) drehbar ist, und einen Servomotor (436), der fest mit dem feststehenden Gehäuse (433) verbunden ist, umfasst, wobei der Servomotor (436) in Antriebsverbindung mit einer Gewindespindel der ersten Kugelumlaufspindel (435) steht, eine Mutter der ersten Kugelumlaufspindel (435) fest mit der Antriebsstange (434) verbunden ist, die fest mit dem Heberahmen (431) verbunden ist, und das feststehende Gehäuse (433) fest mit dem Rahmen (100) verbunden ist,
wobei die vollelektrische fixierte Unterflur-Drehmaschine für Radsätze ferner einen Drucksensor (437) umfasst, über den die Antriebsstange (434) fest mit dem Heberahmen (431) verbunden ist.

2. Vollelektrische fixierte Unterflur-Drehmaschine für Radsätze nach Anspruch 1, **dadurch gekennzeichnet, dass** die Nivelliervorrichtung (440) ein Nivelliergehäuse (441) umfasst, eine Nivellierstange (442), deren eines Ende verschiebbar im Nivelliergehäuse (441) gelagert ist, eine zweite Kugelumlaufspindel (443), die drehbar im Nivelliergehäuse (441) gelagert ist, und eine Handstange (444), die fest mit der zweiten Kugelumlaufspindel (443) verbunden ist, eine Mutter der zweiten Kugelumlaufspindel (443), die fest mit der Nivellierstange (442) verbunden ist, die Nivellierstange (442) ist schwenkbar an der Nivellierhalterung (410) angelenkt, und das Nivelliergehäuse (441) ist fest mit dem Rahmen (100) verbunden.

3. Vollelektrische fixierte Unterflur-Drehmaschine für Radsätze nach Anspruch 1, **dadurch gekennzeichnet, dass** sie ferner Rad-Axialbegrenzungseinrichtungen (500) umfasst, wobei die beiden Rad-Axialbegrenzungseinrichtungen (500) jeweils an den Innenseiten der beiden Räder (800) anliegen und die Rad-Axialbegrenzungseinrichtungen (500) dazu ausgelegt sind, die Räder (800) in axialer Richtung der Räder (800) zu begrenzen.

4. Vollelektrische fixierte Unterflur-Drehmaschine für Radsätze nach Anspruch 3, **dadurch gekennzeichnet, dass** jede Rad-Axialbegrenzungseinrichtung (500) einen Gerätekörper (510), eine Begrenzungsstange (520), deren eines Ende verschiebbar mit dem Gerätekörper (510) verbunden ist, eine drehbar mit der Begrenzungsstange (520) verbundene Begrenzungsrolle (530), sowie eine Druckbaugruppe (540) umfasst, die so ausgebildet ist, dass sie die Begrenzungsstange (520) zum Gleiten drückt; die Begrenzungsrolle (530) ist mit Begrenzungsnuten (531) versehen, die an den Felgen der Räder (800) anliegen; und der Gerätekörper (510) ist fest mit dem Rahmen (100) verbunden.

5. Vollelektrische fixierte Unterflur-Drehmaschine für Radsätze nach Anspruch 4, **dadurch gekennzeichnet, dass** die Druckbaugruppe (540) eine dritte Kugelumlaufspindel (541) und einen ersten Antriebsmotor (542) umfasst, wobei der erste Antriebsmotor (542) in Antriebsverbindung mit einer Gewindespindel der dritten Kugelumlaufspindel (541) steht, eine Mutter der dritten Kugelumlaufspindel (541) fest mit der Begrenzungsstange (520) verbunden ist und der erste Antriebsmotor (542) fest mit dem Gerätekörper (510) verbunden ist.

6. Vollelektrische fixierte Unterflur-Drehmaschine für Radsätze nach Anspruch 4, **dadurch gekennzeichnet, dass** eine Außenhülse der Begrenzungsstange (520) mit einer Führungshülse (600) versehen ist, deren eines Ende verschiebbar mit dem Gerätekörper (510) verbunden ist, wobei die Führungshülse (600) bei einer Bewegung der Begrenzungsstange (520) mitbewegt wird.

7. Vollelektrische fixierte Unterflur-Drehmaschine für Radsätze nach Anspruch 6, **dadurch gekennzeichnet, dass** am Gerätekörper (510) ein Begrenzungsblock (511) zur Begrenzung der Bewegung der Führungshülse (600) vorgesehen ist, dass an der Begrenzungsstange (520) ein Drehsitz (700) angelenkt ist, dass die Begrenzungsrolle (530) drehbar mit dem Drehsitz (700) verbunden ist, wobei ein Ende in der Nähe der Begrenzungsrolle (530) gelenkig mit der Führungshülse (600) verbunden ist.

## Revendications

1. Tour à essieux montés en fosse fixe tout électrique, comprenant :
un bâti (100), deux rails (200) disposés sur le bâti (100), deux outils de tournage (300) disposés sur le bâti (100) et deux dispositifs d'entraînement de roue (400) disposés sur le bâti (100), en ce que chaque dispositif d'entraînement de roue (400) comprend un support de mise à niveau (410), des ensembles d'entraînement (420) disposés sur le support de mise à niveau (410), un ensemble de levage (430) disposé sur le support de mise à niveau (410) et un ensemble de mise à niveau (440) disposé sur le support de mise à niveau (410), l'ensemble de levage (430) et l'ensemble de mise à niveau (440) sont tous deux reliés à demeure au bâti (100), les ensembles d'entraînement (420) sont conçus pour faire tourner les roues (800), et l'ensemble de levage (430) est conçu pour lever le support de mise à niveau (410) ;
en ce que l'ensemble de levage (430) comprend un châssis de levage (431) et une structure d'entraînement (432) pour l'entraînement du châssis de levage (431), en ce que la structure d'entraînement (432) est reliée à demeure au bâti (100), et le châssis de levage (431) est articulé sur le support de mise à niveau (410),
en ce que la structure d'entraînement (432) comprend un logement fixe (433), une tige d'entraînement (434) dont une extrémité est reliée de manière coulissante dans le logement fixe (433), une première vis à billes (435) pouvant tourner dans le logement fixe (433) et un servomoteur (436) relié à demeure au logement fixe (433), en ce que le servomoteur (436) est en liaison de transmission avec une vis de la première vis à billes (435), un écrou de la première vis à billes (435) est relié à demeure à la tige d'entraînement (434) qui est reliée à demeure au châssis de levage (431), et le logement fixe (433) est relié à demeure au bâti (100),
en ce que le tour à essieux montés en fosse fixe tout électrique comprend en outre un capteur de pression (437) par le biais duquel la tige d'entraînement (434) est reliée à demeure au châssis de levage (431).

2. Tour à essieux montés en fosse fixe tout électrique selon la revendication 1, **caractérisé en ce que** l'ensemble de mise à niveau (440) comprend un boîtier de mise à niveau (441), une tige de mise à niveau (442) dont une extrémité est reliée de manière coulissante dans le boîtier de mise à niveau (441), une deuxième vis à billes (443) reliée de manière rotative dans le boîtier de mise à niveau (441) et une tige portative (444) reliée à demeure à la deuxième vis à billes (443), un écrou de la deuxième vis à billes (443) est reliée à demeure à la tige de mise à niveau (442), la tige de mise à niveau (442) est articulée sur le support de mise à niveau (410), et le boîtier de mise à niveau (441) est relié à demeure au bâti (100).

3. Tour à essieux montés en fosse fixe tout électrique selon la revendication 1, **caractérisé en ce qu'**il comprend en outre des dispositifs de limitation axiale de roue (500), **en ce que** les deux dispositifs de limitation axiale de roue (500) viennent respectivement en butée contre les faces intérieures de deux roues (800), et les dispositifs de limitation axiale de roue (500) sont conçus pour limiter les roues (800) dans un sens axial des roues (800).

4. Tour à essieux montés en fosse fixe tout électrique selon la revendication 3, **caractérisé en ce que** chaque dispositif de limitation axiale de roue (500) comprend un corps de dispositif (510), une tige de limitation (520) dont une extrémité est reliée de manière coulissante dans le corps de dispositif (510), une poulie de limitation (530) reliée de manière rotative à la tige de limitation (520) et un ensemble de poussée (540) conçu pour pousser la tige de limitation (520) à coulisser ; la poulie de limitation (530) comporte des rainures de limitation (531) venant en butée contre des jantes des routes (800) ; et le corps de dispositif (510) est relié à demeure au bâti (100).

5. Tour à essieux montés en fosse fixe tout électrique selon la revendication 4, **caractérisé en ce que** l'ensemble de poussée (540) comprend une troisième vis à billes (541) et un premier moteur d'entraînement (542), **en ce que** le premier moteur d'entraînement (542) est en liaison de transmission avec une vis de la troisième vis à billes (541), un écrou de la troisième vis à billes (541) est relié à demeure à la tige de limitation (520) et le premier moteur d'entraînement (542) est relié à demeure au corps de dispositif (510).

6. Tour à essieux montés en fosse fixe tout électrique selon la revendication 4, **caractérisé en ce que** un manchon extérieur de la tige de limitation (520) comporte un manchon de guidage (600) dont une extrémité est reliée de manière coulissante au corps de dispositif (510) et le manchon de guidage (600) se déplace en fonction du déplacement de la tige de limitation (520).

7. Tour à essieux montés en fosse fixe tout électrique selon la revendication 6, **caractérisé en ce qu'**un bloc de limitation (511) destiné à limiter le déplacement du manchon de guidage (600) est disposé sur le corps de dispositif (510), une surface d'appui en rotation (700) est articulée sur la tige de limitation (520), la poulie de limitation (530) est reliée de manière rotative à la surface d'appui en rotation (700) dont une extrémité située à proximité de la poulie de limitation (530) est articulée avec le manchon de guidage (600).
